# EUROPÄISCHE PATENTSCHRIFT

(11) **EP 0 477 656 B1**
(45) Veröffentlichungstag und Bekanntmachung des Hinweises auf die Patenterteilung: **06.03.1996**
(21) Anmeldenummer: 91115328.6
(22) Anmeldetag: 11.09.1991
(51) Int. Cl.: B65G 69/00

(54) **Verformbare Dichtung des Spaltes zwischen dem Rand einer Gebäudeöffnung und dem Heck eines an diese herangefahrenen Fahrzeuges**
Ductile sealing of the slot between the border of a building's opening and the tail of an approaching vehicle
Etanchement déformable pour la fente entre le bord d'une ouverture de bâtiment et l'arrière d'un véhicule s'y approchant

(30) Priorität: 25.09.1990 DE 4030255
(43) Veröffentlichungstag der Anmeldung: 01.04.1992
(73) Patentinhaber: Alten, Kurt, D-30974 Wennigsen (DE)
(72) Erfinder: Alten, Kurt, D-30974 Wennigsen (DE)
(74) Vertreter: Depmeyer, Lothar

(56) Entgegenhaltungen:
- US-A- 3 699 733
- US-A- 4 601 142
- US-A- 4 799 342

## Beschreibung

Die Erfindung betrifft eine verformbare Dichtung des Spaltes zwischen dem Rand einer Gebäudeöffnung und dem Heck eines an diese herangefahrenen Fahrzeuges mit einer lappigen, verformbaren Schürze aus einem oberen Querteil und zwei zu beiden Seiten der Gebäudeöffnung befindlichen, senkrechten Streifen, die an der Stirnfläche eines im Querschnitt quadratischen oder rechteckigen, hinten am Gebäude befestigten, elastisch nachgiebigen Tragkörpers in Gestalt eines Blockes aus einem elastisch verformbaren Schaum aus Kunststoff, Gummi od. dergl. befestigt sind, der einen biegsamen Bezug aufweist, wie z.B. aus US-A-4 799 342 bekannt.

Bei ähnlichen Dichtungen dieser Art ( DE-C-36 31 591 ) wird der Kern der Tragkörper von waagerechten Schraubenfedern gebildet, die am vorderen Ende eine brettartige Versteifung tragen, welche den die Stirnfläche des Bezuges bildenden, zur Befestigung der senkrechten Streifen dienenden Abschnitt der Tragkörper von innen halten. Es versteht sich, dass diese brettartige Versteifung zu einer Verminderung der Verformbarkeit der Dichtung führt. Der Anpassbarkeit der Dichtung an unterschiedliche Konturen der Fahrzeuge sind daher Grenzen gesetzt.

Der Erfindung liegt im wesentlichen die Aufgabe zugrunde, die eingangs erwähnten Dichtungen so auszubilden, dass die Verformbarkeit der Dichtung im Bereich der vorderen Abschnitte der Tragkörper ( Stirnseite ) wesentlich verbessert wird, damit auch die senkrechten Bestandteile der Schürze ( Streifen ) eine verbesserte Anschmiegsamkeit erfahren können.

Zur Lösung dieser Aufgabe erfindungsgemäss der Block ein weich eingestellter, Schaumkörper, der den zur Befestigung der senkrechten Streifen dienenden Abschnitt ( Stirnabschnitt ) des Bezuges von innen mit elastischer Eigenspannung beaufschlagt.

Eine solche Vorspannung des Tragkörperkernes führt zu einer gesteigerten Hüllsteifigkeit des Tragkörpers in einem solchen Masse, dass er ohne zusätzliche Versteifungen in der Lage ist, die erwähnten, aus Gewebe, Folie od. dgl. bestehenden Streifen zu tragen. Dennoch ist aber ein ausreichendes Mass an Verformbarkeit und Anschmiegsamkeit sichergestellt.

Eine solche Vorspannung eröffnet auch die Möglichkeit, die dem Gebäude zugekehrten Ränder des Bezuges mittels Randverdickungen in Hinterschneidungen an der Gebäudeseite zu befestigen. Die in den Schaumstoff eingeleitete elastische Vorspannung begünstigt die Halterung der Bezugränder, die ohne weiteres lösbar angeordnet werden können.

Die Vorspannung innerhalb des Tragkörperkerns hat also den Vorteil einer verbesserten Verformbarkeit der senkrechten Streifen und insg. der Tragkörper sowie die Wirkung einer verbesserten, lösbaren Befestigung der Bezugränder. Dabei kann die in den Tragkörperkern eingeleitete Vorspannung gerade so gross sein, dass einerseits der erwähnte Formschluss im Bereich der Bezugränder sichergestellt, andererseits aber die Hüllsteifigkeit nicht so vergrössert wird, dass eine Beeinträchtigung der Verformbarkeit der Dichtung entsteht.

Wichtig ist ferner, dass der Tragkörperkern lose an der Rückseite des die senkrechten Streifen tragenden Abschnittes des Bezuges anliegt; hier ist nur ein Reibschluss aufgrund der Vorspannung vorgesehen, um die Verformbarkeit so wenig wie möglich negativ zu beeinflussen.

Weitere Einzelheiten der Erfindung werden anhand der Zeichnung erläutert, in der ein Ausführungsbei-spiel der Erfindung dargestellt ist.

Es zeigen :

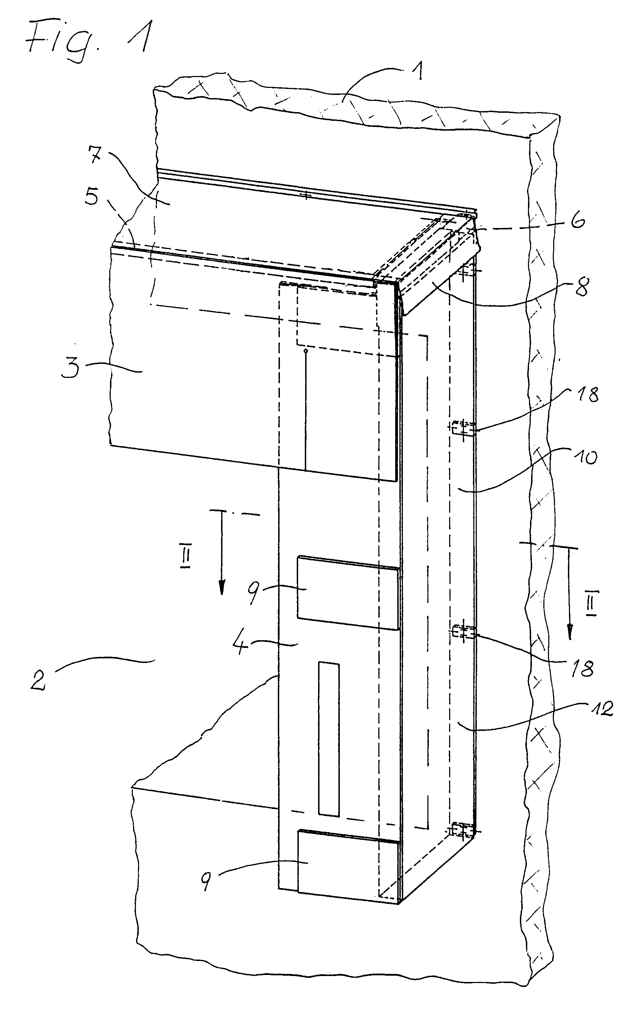

- Fig. 1: die rechte Hälfte einer sog. Torabdichtung vor der Toröffnung eines Warenhauses und

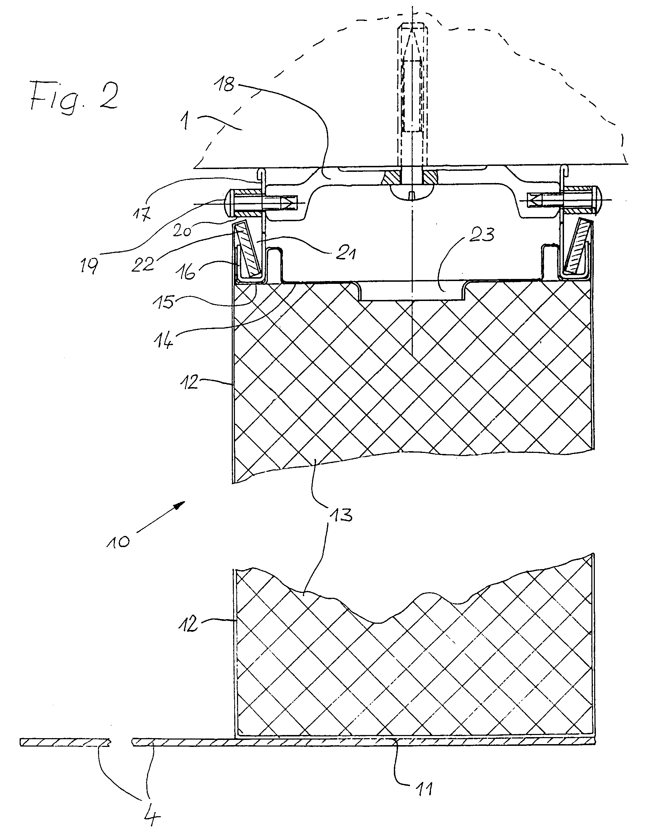

- Fig. 2: einen waagerechten Schnitt nach der Linie II - II von Fig. 1.

Die Aussenwandung 1 hat eine Gebäudeöffnung 2, die meist durch ein Sektionaltor verschliessbar und über die das Warenhaus zugänglich ist.

Um den Spalt zwischen dem Heck eines andockenden Fahrzeuges einerseits und dem Rand der Gebäudeöffnung 2 im wesentlichen abzudichten ist die erfindungsgemässe, nachstehend erläuterte sog. Torabdichtung vorgesehen.

Im Abstand von der Aussenwand 1 ist eine verformbare Schürze angebracht, die aus einem oberen Querteil 3 und zwei zu beiden Seiten der Gebäudeöffnung 2 angeordneten, senkrechten Streifen 4 besteht. Die Streifen 4 und das Querteil 3 bestehen aus einem lappigen, folienartigen Material, das eine Verformung und eine Anpassung an das Fahrzeugheck zulässt. Gewöhnlich bestehen diese Teile aus einem mit Kunststoff oder Gummi behandelten Gewebe.

Das Querteil 3, das wie eine Gardine herabhängt, ist am oberen Rand mit einem dünnen Querträger 5 verbunden, dessen Enden an den seitlichen Rändern der Torabdichtung durch an der Aussenwand 1 gelagerte Arme 6 gehalten sind. Der Raum zwischen dem Querträger 5 und der Aussenwand 1 wird durch eine Plane 7 überbrückt, die wasserdicht ist.

Das Querteil 5 mit der Plane 7 und zwei an den Enden dieser Plane 7 befindlichen, aussen herabhängenden Lappen 8 sind bezüglich ihrer Lagerung und Halterung unabhängig von den beiden Streifen 4 und deren Tragkörper. Um jedoch bei zu starken Verformungen und Beaufschlagungen des Querteils 3 durch das Heck des Fahrzeuges eine ausreichende Nachgiebigkeit zu erreichen, können die beiden Arme 6 gegen eine Rückstellkraft z.B. gegen eine Druckfeder verkürzbar ausgeführt werden, was auch durch eine Teleskopanordnung ermöglicht werden kann.

Die beiden Streifen 4, die oben, unten und auf halber Höhe eine aufgehaftete biegsame Folienverstärkung 9 haben können, wird von zu beiden Seiten der Gebäudeöffnung 2 angeordneten, senkrechten, im Querschnitt rechteckigen Tragkörpern 1o gehalten, die an ihrem hinteren Ende fest an der Aussenwand 1 gelagert sind und vorne flächig an ihrer Stirnfläche 11 haftend mit den Streifen 4 verbunden sind.

Die als Befestigungsfläche dienende Stirnfläche 11 wird von einem folienartigen, zweckmässigerweise aus Gummi oder Kunststoff mit Gewebe bestehenden Bezug 12 gebildet, die einen rechteckigen, sich über die Höhe der Streifen 4 erstreckenden Block 13 aus weich eingestellten Kunststoffschaum umschliesst. Das hintere Ende des Blockes 13 liegt an einem aus Stahlblech geformten Profil 14 an, das auf seiner Rückseite an beiden Rändern mit einer Längsnut 15 versehen ist, in die das u-förmig gebogene Ende 16 von Befestigungsprofilen 17 spielfrei eingreift, die mit den Rändern von über die Höhe der Torabdichtung verteilten Laschen 18 fest verschraubt sind. Diese Laschen 18 sind ihrerseits an der Aussenwandung 1 angeschraubt. Die Befestigungsschrauben 19 für Befestigungsprofile 17 springen dabei durch Distanzhülsen 2o bis an den seitlichen Rand der Tragkörper 1o vor. Somit werden auf dem Rücken der Profile 14 Nuten 21 geschaffen, und zwar auf jeder Seite der Tragkörper 1o.

Die freien Enden des Bezuges 12 sind durch eine angehaftete rechteckige Leiste 22 randverdickt, die in die Nut 21 kippsicher eingreift. Zur Montage und zur Befestigung des Blockes 13 wird der Bezug 12 gestrafft unter Zusammendrückung des Blockes 13, der dabei eine elastische Verformung erfährt. Nachdem die Ränder des Bezuges 12 mit der Leiste 22 in die Nut 21 eingeführt sind, ist der Bezug 12 fixiert und damit auch der Block 13 befestigt. Die elastische Eigenspannung des Blockes 13 hält eine Zugspannung im Bezug 12 aufrecht. Die Befestigung ist also sichergestellt, Die Leiste 12 kann nicht entweichen, und zwar auch nicht ungewollt, weil sich die Befestigungsschrauben 19 vor der Öffnung der Nuten 21 befindet. Die Nutbreite der Nuten 21 ist - wie die Zeichnung offenbart - nur geringfügig breiter als die Wandstärke der Leiste 22. Diese kann also innerhalb der Nut 21 nicht kippen, was auch eine entsprechende Tiefe der Nut 21 voraussetzt.

Die so in den Block 13 eingeleitete Vorspannung erhöht die Hüllsteifigkeit und Formbeständigkeit des Blockes 13 in einem Masse, das zum Tragen der Streifen 4 saureichend ist. Zugleich bleibt aber der Streifen 4 und der Block 13 mit dem Bezug 12 in ausreichendem Masse verformbar, sollte das andockende Fahrzeug versuchen, die Dichtung frontal oder schräg - auch im Bereich des Tragkörpers 1o - zu verformen. Die Bereiche vorne am Block 13 in der Nähe der Stirnfläche 11 bleiben ebenfalls ausreichend verformbar. Die in den Block 13 eingebrachte Vorspannung kann vergleichsweise gering sein. Beträgt die Entfernung von der Stirnfläche 11 vom Profil 14 z.B. 5oo mm, so soll die durch das Anziehen des Bezuges 12 bewirkte Verkürzung nur etwa 1o - 3o mm, vorzugsweise nur 15 mm betragen. Diese Vorspannung ist auch ausreichend , um ein Herunterrutschen des Blockes 13 nach unten durch einen elastischen Formschluss - bewirkt durch einen Vorsprung 23 am Profil 14 - zu vermeiden.

Am oberen und unteren Ende des Blockes 13, also im Bereich der Enden der Streifen 4 liegen die Endflächen der Blöcke 13 frei. Um diese zu schützen, wird ein Auftrag in Form eines elastisch verformbaren z.B. aus Gummi oder Kunststoff bestehenden Films vorgesehen. Er bewirkt einen gegen die Einflüsse von UV-Strahlen, Ozon und anderen schädlichen Umwelteinflüssen wirksamen Schutz im Endbereich des Blockes 13.

Sieht man von dem Formschluss am Vorsprung 23 ab, so besteht in allen anderen Bereichen zwischen dem Block 13 und dem Bezug 12 nur ein Reibungsschluss, der - wie schon erwähnt - eine gute Verformbarkeit gewährleistet.

## Patentansprüche

1. Verformbare Dichtung des Spaltes zwischen dem Rand einer Gebäudeöffnung (2) und dem Heck eines an diese herangefahrenen Fahrzeuges mit einer lappigen, verformbaren Schürze aus einem oben gelegenen Querteil (3) und zwei zu beiden Seiten der Gebäudeöffnung befindlichen, senkrechten Streifen (4), die an der Stirnfläche (11) eines im Querschnitt quadratischen oder rechteckigen, hinten am Gebäude befestigten, elastisch nachgiebigen Tragkörpers (10) in Gestalt eines Blockes (13) aus einem elastisch verformbaren Schaum aus Kunststoff, Gummi od. dgl. befestigt sind, der einen biegsamen, zugfesten Bezug aufweist, dadurch gekennzeichnet, dass der Block (13) ein weich eingestellter, Schaumkörper ist, der den zur Befestigung der senkrechten Streifen (4) dienenden Abschnitt (11) des Bezuges (12) von innen mit elastischer Eigenspannung beaufschlagt.

2. Dichtung nach Anspruch 1, dadurch gekennzeichnet, dass der Block (13) unmittelbar an dem Abschnitt (11) anliegt.

3. Dichtung nach Anspruch 1, dadurch gekennzeichnet, dass die zur Erzeugung der elastischen Vorspannung dienende Zusammendrückung des Blockes etwa 1/5o - 3/5o der unverformten Ausdehnung des Blockes (13) beträgt.

4. Dichtung nach Anspruch 1, dadurch gekennzeichnet, dass die elastische Eigenspannung des Blockes (13) die hakenartig befestigten freien Befestigungsränder des Bezuges (12) in ihrer Befestigungsstellung halten.

5. Dichtung nach Anspruch 4, dadurch gekennzeichnet, dass die Befestigungsränder des Bezuges (12) randverdickt und in einer in Bezug auf den Block (13) hinterschnittenen Nut (21) gehalten sind.

6. Dichtung nach Anspruch 5, dadurch gekennzeichnet, dass der Bezug (12) durch eine haftend aufgebrachte Leiste (22) randverdickt ist.

7. Dichtung nach Anspruch 5 und 6, dadurch gekennzeichnet, dass die Leiste (22) kippsicher in der Nut (21) gehalten ist.

8. Dichtung nach Anspruch 5, dadurch gekennzeichnet, dass sich vor der Nutöffnung eine ein ungewolltes Herausrutschen der Randverdickung aus der Nut (21) verhindernde Sperre (2o) befindet.

9. Dichtung nach einem oder mehreren vorhergehenden Ansprüchen, dadurch gekennzeichnet, dass das zur Anlage des Blockes (13) dienende Anschlagprofil ( Profil 14 ) im Randbereich auf seiner Rückseite mit einer nutartigen Vertiefung versehen ist, in die ein u-förmig gebogener Rand von zu beiden Seiten des Tragkörpers befindlichen Befestigungsprofilen (17) eingreift, welche mit an der Aussenwandung (1) des Gebäudes befestigten Befestigungslaschen (18) verbunden sind.

10. Dichtung nach Anspruch 9, dadurch gekennzeichnet, dass das Anschlagprofil (14) mit einem oder mehreren,über dessen Länge verteilten Vorsprüngen (23) versehen ist, die zur Verhinderung von Rutschbewegungen formschlüssig in den Block (13) eingreifen.

11. Dichtung nach Anspruch 1, dadurch gekennzeichnet, dass die Endflächen des Blockes (13) mit einem elastisch verformbaren Schutzfilm als Schutz gegen Ozon, UV-Strahlen od. dgl. versehen ist.

12. Dichtung nach Anspruch 1, dadurch gekennzeichnet, dass das durch einen Querträger (5) gehaltene Querteil (3) der Schürze an von der Aussenwandung (1) vorspringenden Armen (6) gelagert ist, die gegen eine Rückstellkraft (Feder) in der Länge verkürzbar sind.

13. Dichtung nach Anspruch 1, dadurch gekennzeichnet, dass in dem den Streifen (4) zugekehrten Bereich der Block (13) seinen Bezug aussen nur mit Reibschluss berührt und der den Streifen zugekehrte Abschnitt des Bezuges haftend mit den Streifen verbunden ist.

## Claims

1. Deformable seal for sealing the gap between the edge of a building opening (2) and the rear of a vehicle which has been driven up to said opening, having a soft, deformable apron formed from an upper transverse member (3) and two vertical strips (4), which are situated on both sides of the building opening and are secured to the end face (11) of an elastically resilient supporting member (10), which has a square or rectangular cross-section and is mounted with its rear side on the building, said supporting member being in the form of a block (13) formed from an elastically deformable foam of plastics material, rubber or the like and having a flexible, substantially inextensible covering, chracterised in that the block (13) is a soft-set foam body which acts upon the portion (11) of the covering (12) from within due to its inherent resilient stress, said portion serving for the mounting of the vertical strips (4).

2. Seal according to claim 1, characterised in that the block (13) abuts directly against the portion (11).

3. Seal according to claim 1, characterised in that the compression of the block, serving to produce the initial resilient stress, is approximately 1/50 - 3/50 of the non-deformed extension of the block (13).

4. Seal according to claim 1, characterised in that the inherent resilient stress of the block (13) retains the free mounting edges of the covering (12) in their mounting position, said edges being mounted in a hook-like manner.

5. Seal according to claim 4, characterised in that the mounting edges of the covering (12) are thickened and retained in a groove (21) which is undercut relative to the block (13).

6. Seal according to claim 5, characterised in that the covering (12) is thickened at its edges by an adhesively applied bar (22).

7. Seal according to claims 5 and 6, characterised in that the bar (22) is retained in the groove (21) in a pivot-preventing manner.

8. Seal according to claim 5, characterised in that a barrier (20), which prevents the thickened edge portion from accidentally sliding from the groove (21), is situated in front of the groove opening.

9. Seal according to one or more preceding claims, characterised in that the stop profile (profile 14), which serves for the abutment of the block (13), is provided with a groove-like recess in the edge region on its rear side, a U-shaped edge of mounting profiles (17) engaging in said recess, said mounting profiles being situated on both sides of the supporting member and being connected to mounting lugs (18) mounted on the external wall (1) of the building.

10. Seal according to claim 9, characterised in that the stop profile (14) is provided with one or more projection members (23), which are distributed over the length of said profile and engage in the block (13) in a form-locking manner to prevent sliding movements.

11. Seal according to claim 1, characterised in that the end faces of the block (13) are provided with an elastically deformable protective film serving as protection against ozone, UV rays or the like.

12. Seal according to claim 1, characterised in that the transverse member (3) of the apron, which member is retained by a transverse support (5), is mounted on arms (6), which protrude from the external wall (1) and can be shortened in respect of their length in opposition to a restoring force (spring).

13. Seal according to claim 1, characterised in that, in the region facing the strips (4), the block (13) is in external contact with its covering only by frictional forces, and the portion of the covering facing the strips being adhesively connected to the strips.

## Revendications

1. Dispositif d'étanchéité déformable de la fosse comprise entre le bord d'une baie (2) de bâtiment et l'arrière d'un véhicule arrivant à cette baie, ayant une jupe flasque, déformable, constituée d'une pièce (3) transversale supérieure et de deux bandes (4) verticales, qui se trouvent de part et d'autre de la baie du bâtiment et qui sont fixées à la surface (11) frontale d'un support (10) de section transversale carrée ou rectangulaire, en forme d'un bloc (13) de mousse déformable élastiquement en matière plastique, en caoutchouc ou analogues, lequel est fixé à l'arrière du bâtiment, peut céder élastiquement et comporte un revêtement flexible, résistant à la traction, caractérisé en ce que le bloc (13) est un corps de mousse mou et qui, de l'intérieur, charge d'une contrainte élastique propre la partie (11) du revêtement (12) qui sert à fixer les bandes (4) verticales.

2. Dispositif d'étanchéité suivant la revendication 1, caractérisé en ce que le bloc (13) s'applique directement à la partie (11).

3. Dispositif d'étanchéité suivant la revendication 1, caractérisé en ce que la compression du bloc servant à produire la précontrainte élastique représente d'environ 1/50 à 3/50 du bloc (13) non déformé.

4. Dispositif d'étanchéité suivant la revendication 1, caractérisé en ce que la contrainte élastique propre du bloc (13) maintient en leur position de fixation les bords libres de fixation du revêtement (12) qui sont fixés par accrochage.

5. Dispositif d'étanchéité suivant la revendication 4, caractérisé en ce que les bords de fixation du revêtement (12) sont épaissis sur le bord et maintenus dans une rainure (21) qui est en contre-dépouille par rapport au bloc (13).

6. Dispositif d'étanchéité suivant la revendication 5, caractérisé en ce que le revêtement (12) est épaissi sur le bord par une réglette (22) appliquée par collage.

7. Dispositif d'étanchéité suivant les revendications 5 et 6, caractérisé en ce que cette réglette (22) est maintenue dans la rainure (21) de manière à ne pas pouvoir basculer.

8. Dispositif d'étanchéité suivant la revendication 5, caractérisé en ce qu'il se trouve devant l'ouverture de la rainure un obstacle (20) qui empêche que l'épaississement de bord ne glisse involontairement de la rainure (21).

9. Dispositif d'étanchéité suivant une ou plusieurs revendications précédentes, caractérisé en ce que le profil de butée (profil 14), qui sert d'appui au bloc (13), est muni au dos, dans la partie marginale, d'une cavité en forme de rainure, dans laquelle pénètre un bord coudé en forme de U de profils (17) de fixation qui se trouvent de part et d'autre du support et qui sont reliés aux pattes (18) de fixation fixées au mur (1) extérieur du bâtiment.

10. Dispositif d'étanchéité suivant la revendication 9, caractérisé en ce que le profil (14) de butée est muni d'une ou de plusieurs parties (23) saillantes, qui sont réparties sur sa longueur et qui, afin d'empêcher des mouvements de glissement, pénètrent dans le bloc (13) et, formant une liaison par complémentarité de forme.

11. Dispositif d'étanchéité suivant la revendication 1, caractérisé en ce que les surfaces d'extrémité du bloc (13) est muni d'une pellicule de protection déformable élastiquement en tant que protection à l'encontre de l'ozone, des rayons UV ou analogues.

12. Dispositif d'étanchéité suivant la revendication 1, caractérisé en ce que la pièce (3) transversale de la jupe, qui est maintenue par une traverse (5), est montée sur des bras (6) qui font saillie du mur (1) extérieur et qui peuvent être raccourcis à l'encontre d'une force de rappel (ressort).

13. Dispositif d'étanchéité suivant la revendication 1, caractérisé en ce que le bloc (13), dans la région qui est tournée vers les bandes (4), n'est en contact avec son revêtement extérieurement que par une liaison par frottements et, dans la partie du revêtement qui est tournée vers les bandes, est relié aux bandes en y adhérant.
